# EUROPEAN PATENT APPLICATION

(11) **EP 4 011 794 A1**
(43) Date of publication of application: **15.06.2022**
(21) Application number: 21212704.7
(22) Date of filing: 07.12.2021
(51) Int. Cl.: B65D 5/42, B65D 33/00, A47L 15/00, G06K 19/067, H04Q 9/00

(54) **CONSUMER PRODUCT LOCK DATA**

(30) Priority: 09.12.2020 EP 20212839
(71) Applicant: The Procter & Gamble Company, Cincinnati, OH 45202 (US)
(72) Inventor: BAUER, Mathew Stephen, Cincinnati 45202 (US); DEBONTH, Joost, 1853 Strombeek-Bever (BE); LEWIS, Cody Dylan, Cincinnati 45202 (US); NG PAK LEUNG, Clara Sophie, 1853 Strombeek-Bever (BE); RONCATO, Patrick, 1853 Strombeek-Bever, Brussels (BE); STRIEMER, Grant Edward Anders, Cinncinnati 45202 (US)
(74) Representative: Plasseraud IP

(57) **Abstract**

Examples include a consumer product comprising a detergent product and a container, the container comprising a data processing apparatus. The container comprises a first chamber defining a first volume, the first chamber containing the detergent product, the first chamber being accessible through an opening. A lock permits opening or closing of the first chamber. A data processing apparatus comprises a processor, a power source connected to the processor, a sensor connected to the processor and a memory connected to the processor, the sensor being configured to sense the opening or closing of the first chamber by the lock to produce output lock data, the processor being configured to receive the lock data from the sensor.

## Description

### FIELD OF THE INVENTION

A consumer product comprising a detergent product and a container, the container comprising a data processing apparatus.

### BACKGROUND

This invention generally relates to a consumer product comprising a detergent product and a container equipped with a lock. Such a lock may contribute to protecting the detergent product from ingress of humidity. Consumer products are broadly used by numerous end users who may have different abilities or motivations as to locking such a consumer product.

### SUMMARY OF THE INVENTION

A first aspect of the present invention is a consumer product comprising a detergent product and a container, the container comprising:
- a first chamber defining a first volume, the first chamber containing the detergent product, the first chamber being accessible through an opening;
- a lock to permit opening or closing of the first chamber;
- a data processing apparatus comprising a processor, a power source connected to the processor, a sensor connected to the processor and a memory connected to the processor, the sensor being configured to sense the opening or closing of the first chamber by the lock to produce output lock data, the processor being configured to receive the output lock data from the sensor.

A second aspect of the present invention is a method of storing lock data output by a sensor of a consumer product according to any of the above claims, the method comprising:
- sensing, by the sensor, the opening of the lock;
- in response to the sensing of the opening, producing opening time lock data;
- sensing, by the sensor, the closing of the lock;
- in response to the sensing of the closing, producing closing time lock data.

A third aspect of the present invention is a non-transitory machine-readable storage medium encoded with instructions executable by a processor, the machine-readable storage medium comprising instructions to operate according to the method of the present invention.

### BRIEF DESCRIPTION OF THE DRAWINGS

FIG. 1A illustrates a first example consumer product.
FIG. 1B illustrates a second example consumer product.
FIG. 2 illustrates a third example consumer product.
FIG. 3A-B illustrate a fourth example consumer product.
FIG. 4A illustrates a fifth example consumer product.
FIG. 4B illustrates a sixth example consumer product.
FIG. 5A illustrates a first example method.
FIG. 5B illustrates a second example method.
FIG. 6 illustrates a third example method.
FIG. 7A illustrates a fourth example method.

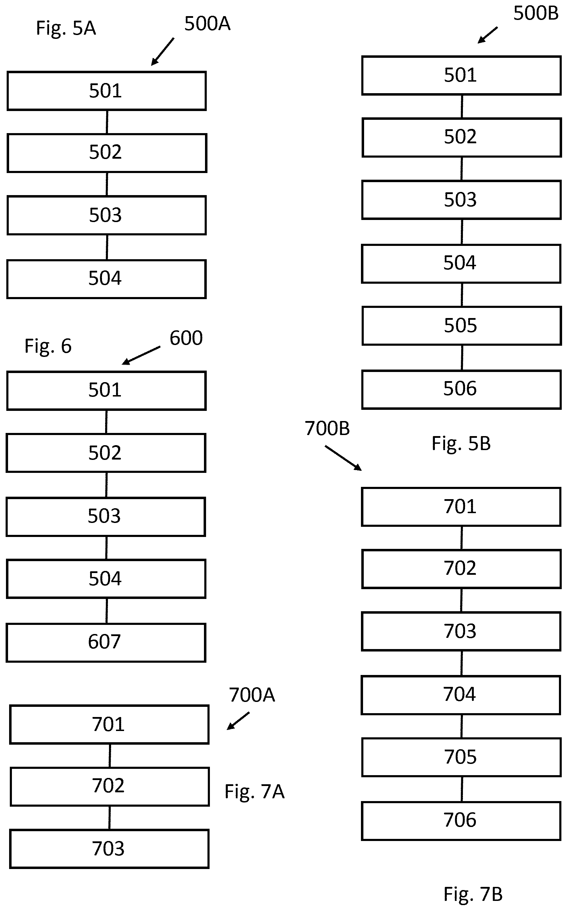

FIG. 7A illustrates a fifth example method.

### DETAILED DESCRIPTION

Due to the variety in end user or consumer abilities and motivations as to locking a consumer product, it is difficult to predict whether a specific lock will be more or less effectively be used by an end user or consumer. In some cases, a lock is designed and implemented by a consumer product manufacturer which will not be used as broadly as expected, resulting in impacting quality or durability of a detergent product in cases where the lock is not used or not used as expected.

In some cases, one could attempt predicting the behavior of users by proceeding with consumer testing of a lock, requesting consumer feedback. Feedback may however be inaccurate and may not represent the reality of a situation or behavior. In order to reduce inaccuracy, one may, during such testing, observe consumer behavior in the context of such consumer testing. It is however difficult to proceed with such observation of consumer testing on a large scale. In addition to this, the fact that a consumer would be aware that testing would be in progress may bias the behavior of the consumer, for example resulting in the consumer being more motivated to effectively close the lock during testing than they would during normal everyday life.

It is an objective of the present disclosure to at least partially resolve such issues in order to provide locks having an improved reliability. Such objective is attained by integrating a sensor in a specific consumer product, such sensor producing lock data. The providing of such a specific consumer product permits large scale reliable consumer testing, leading to identifying reliable lock candidates.

A consumer product should in this disclosure be understood as a product which is provided, among others, to end consumers. Such consumer products may for example be available for purchase in supermarkets and end consumers may store such consumer products in their homes. In some scenarios, a product may be configured in view of marketing study or consumer research, and could be provided to consumers directly by a manufacturer or via a consumer testing agency. Consumer products may be provided in large quantities and should thereby be designed taking environmental concerns into account. Consumer products should also be designed taking transportation to a retail store into account. Consumer products should also be designed taking on the shelf storage in a retail store into account. Consumer products should also be designed taking transportation from a retail store to a consumer home into account. Consumer products should also be designed taking storage at a private end consumer home into account. Consumer products should also be designed taking use of the consumer product at a private end consumer home into account. Consumer products should also be designed taking disposal into account.

The consumer product according to this disclosure comprises a detergent product. Detergent products should be understood in this disclosure as products comprising a surfactant. Detergent products may also comprise a bleach or other ingredients. Example detergent product compositions are described in more detail herein. In some examples, the detergent product comprises unit dose detergent pouches, preferably water soluble unit dose detergent pouches, more preferably flexible water soluble unit dose detergent pouches. Example unit dose detergent pouches are described in more detail herein. Such detergent products are generally sensitive to humidity and may degrade when exposed to a humid environment.

The consumer product according to this disclosure further comprises a container. A container should be understood in this disclosure as an object housing a content. In this disclosure, the container comprises a first chamber defining a first volume, the first chamber containing the detergent product, the first chamber being accessible through an opening. The container facilitates protection, transport, storage, access and disposal of the consumer product. In some examples, the container is selected from a bag, a box or a tub, preferably selected from a plastic bag, a paper bag, a cardboard box or a plastic tub. In some examples, the container comprises different structures, such as a plastic tub structure covered with a cardboard sleeve structure, in which case the data processing apparatus according to this disclosure may be placed between such different structures, for example between the plastic tub and the cardboard sleeve. In some examples, the sensor or additional sensors, for example for measuring storage room conditions, or for example a weight sensor located at a bottom or base of the container to monitor weight changes between opening and closing operations and hence deriving consumption rate data, according to this disclosure, may be placed between such different structures, for example between the plastic tub and the cardboard sleeve. In some examples, the memory according to this disclosure may be placed between such different structures, for example between the plastic tub and the cardboard sleeve, for example allowing a marketing researcher to extract a memory card easily.

In some examples, the container comprises a box. A box should be understood as a generally parallelepiped, barrel shaped, cylindrical, round, oval, octagonal or cubical three dimensional object defining a cavity. The use of parallelepiped boxes may facilitate storage and transportation by permitting piling up boxes in a space efficient manner. In some examples, a box may be a parallelepiped provided with some rounded, tapered trapezium or chamfered edges.

The container may in some examples comprise a base, sidewalls and the opening. A base according to this disclosure should be understood as a surface on which the container may lie when placed on a supporting surface such as a shelf or a floor. In some examples, the base is flat. In some examples, the base is rectangular. In some examples, the base is oval or round. In some examples, the base has an embossed profile standing in or out in relief. In some examples, preferably in the case of plastic tub containers, the base is a so called "champagne bottom" whereby the tub lays on an outer rim of the base, the base itself comprising an elevated portion away from the outer rim. The sidewalls according to this disclosure should be understood as extending from the base, and connecting the base to the opening, to a transition piece or to a lid. It should be understood that the connection of the base to the opening may include a transition piece in addition to a sidewall. A transition piece may be glued or otherwise attached to a sidewall for example. In some examples, the sidewalls are perpendicular to the base. In some examples, the base is rectangular and has four sides, four sidewalls extending perpendicular from the base, each sidewall being rectangular, each side wall being connected by a sidewall side to a side of the base, and by two other sidewall sides to two other of the four sidewalls. In some examples the base is oval or circular and the sidewalls form a generally cylindrical wall extending from the base in a direction normal or perpendicular to the base. In some examples, sidewalls have a shape corresponding to one of a square, a rectangle, a trapeze, a section of a sphere, a section of an ovoid, or a section of an ellipsoid. In some examples, the container is a bag comprising two sidewalls facing each other. The opening according to this disclosure should be understood as an aperture providing access to the detergent product comprised in the container. In some examples, the opening faces the base. In some examples, the opening has a surface of less than the surface of the base. In some examples, the opening has a surface larger than the surface of the base in order to provide an improved access, for example using sidewalls extending from the base at angle of more than 90 degrees from the base. In some examples, the opening is provided after removal of a tamper proof feature, for example comprising a perforated piece to be removed at first use or a tamper evident sticker. In some examples, the opening is placed on a top panel of the container, the top panel of the container facing a base of the container, the top panel of the container being separated from the base of the container by at least the sidewalls, the top panel of the container being generally coplanar with a base of the container, whereby the opening covers a portion of the top panel, the top panel comprising a peripheral section surrounding the opening, the peripheral section being a transition piece between a sidewall and the opening for example. In some examples, the opening is rectangular. In some examples, the opening is rectangular with rounded edges. In some examples, the opening is round or oval.

In examples of a container in the form of a box or a tub, such container may comprise a lid which should be understood as an element permitting to repeatedly close or open the opening of the container. In some examples the lid may be connected to the box or tub, for example by a hinge, or may be separated from the box or tub. The lid may comprise a top and flanks or lid flanks. It should be understood that the top of the lid is aimed at covering the opening of the box or tub when the lid is in a closed position. In some examples, the top of the lid is rectangular. In some examples the top of the lid is round, hexagonal, octagonal, or oval, structures such as round or oval being for example approximated by multiplying a number of side panels and lid flaps. In some examples, the lid comprises beveled edges. In some examples, the top of the lid is rectangular with rounded edges. It should be understood that while being named "top", the top of the lid may be positioned in different orientations. The lid may comprise flanks. It should be understood that the flanks according to this disclosure are elements connected to the top of the lid and extending from the lid in order to engage one or more sidewalls of the box. The flanks participate in placing the top of the lid onto the opening. In some examples, the flanks extend perpendicularly from the top of the lid. In some examples, the flanks surround an entire perimeter of the top of the lid. In some examples, the flanks partially surround an entire perimeter of the top of the lid, a portion of the top of the lid being flankless. The top of the lid may cover the opening, and at least a portion of the flanks may cover at least a specific portion of the sidewalls when the lid is in the closed position, the lid being moveable from the closed position to an open position. Movement of the lid may be restrained by a connection to the box or tub such as a hinge, or may be entirely removable, for example to provide an improved access to the content of the box or tub. The box or tub and lid cooperate to participate in fulfilling the role of the container to store, transport and facilitate access to the content of the container. In some examples, the container comprises a box and a lid, whereby the box and lid are in a sliding, match box or drawer configuration, whereby the lid surrounds the box, the sliding of the lid uncovering the opening of the box.

In some examples, the container is a bag. A bag should be understood as a container made of a flexible sheet material. When empty, a bag may advantageously be rolled, folded or crumpled in order to be stored or recycled. A bag may comprise a number of panels or side walls. A bag may comprise one or more seals. A bag may comprise a base, in particular when the bag is a standalone bag. A standalone bag may stand when placed on seals, in particular rigid seals, defining bottom bag edges on which the bag may stand. Such bottom bag edges may define a base of the bag. In some examples, a bag is a standalone bag standing on a base comprising folded lines gusseting the bottom of the bag into a flat contour to enable the bag to stand upright. Example bag bases include a round bottom sealed base, for example for lighter products of less than about 200g, a K shaped sealed base, for example for medium weight products of more than about 200g and of less than about 500g, or a plow folded base with corner seal, for example for heavier products of more than about 500g.

A bag comprises an opening. In some examples, the bag comprises a base and an opening, the opening facing a side of the bag opposite the base. In some examples, the bag comprises a side opening, the side opening for example being at a non zero angle to a plane comprising bottom bag edges. In some examples, the opening is opened by a user after purchase of the bag, for example by tearing a part of a film forming the bag. Bags may be standalone bags or maybe refill bags. In some examples, the bag further comprises a tamper elements aimed at being removed when first opened by a user.

The container according to this disclosure comprises a lock. A lock should be in this disclosure understood as a mechanism preventing or reducing the likelihood of an accidental opening. In some examples, the lock according to this disclosure is to maintain a lid of a box or tub in a closed position. In some examples, the lock according to this disclosure is a press-to-close, a zip lock, a locking tab or locking cover for a container in the form of a bag. It should be understood that the lock according to this disclosure is expected to function under normal use of the container. It should be understood that the lock may not fulfill its function when for example unusual use is made of the container, or when the container is under unusual conditions. In some examples, the lock comprises an actuator moveable from a locking position to an opening position by applying an actuation pressure onto the actuator. The lock permits opening or closing the first chamber.

The container according to this disclosure comprises a data processing apparatus comprising a processor. A processor may comprise electronic circuits for computation managed by an operating system. Such a processor may operate to perform instructions encoded on a memory connected to the processor. The data processing apparatus according to this disclosure further comprises such a memory connected to the processor. Such memory should be understood as a machine-readable storage medium or non-transitory machine-readable storage medium comprising instructions to operate the processor. A memory or computer readable storage according to this disclosure may be any electronic, magnetic, optical or other physical storage device that stores executable instructions. The computer readable storage may be, for example, Random Access Memory (RAM), an Electrically Erasable Programmable Read Only Memory (EEPROM), a storage drive, and optical disk, and the like. As described hereby, the computer readable storage may be encoded with executable instructions according to the methods hereby described. The data processing apparatus further comprises a power source connected to the processor. In some examples, the power source is configured to operate the data processing apparatus for at least 7 days, the power source being preferably a battery. In some examples, the power source is configured to operate the data processing apparatus for at least 10 days, the power source being preferably a battery. In some examples, the power source is configured to operate the data processing apparatus for at least 15 days, the power source being preferably a battery. In some examples, the battery is a rechargeable battery. In some examples, the battery is configured as a single use disposable battery which may be replaced. The battery, for example, may include one or more silver oxide batteries, nickel cadmium batteries, lithium batteries, alkaline batteries, capacitors or other energy storage devices. In some examples, the power source is configured to operate the data processing apparatus for at least 30 days, the power source being preferably a battery. In some examples, the power source is a transformer which may be inductively connected to another transformer on which the container is placed. In some examples, the power source is configured to be charged by induction, for example by placing the container on, near or beside an inductive power source. In some examples, the consumer product further comprises an inductive pad, the inductive pad being connectable to an electrical power network, the power source of the data processing apparatus being configured to be inductively charged through the inductive pad. In some examples, in order to limit power consumption, the sensor could be configured to be in a "deep sleep" mode (for example during transportation or shipment) until a certain moment from which such sensor may awake and start recording. Sensor may awake on a set date, or may awake due to an external interaction, for example when shaken.

The data processing apparatus comprises a sensor connected to the processor. The sensor is configured to sense the opening or closing of the first chamber by the lock to produce output lock data, the processor being configured to receive the output lock data from the sensor. This combination of features permits collecting data related to consumer behaviour as to using the lock, thereby permitting evaluating the performance of such lock in view of appropriately protecting the detergent product.

In some examples, the processor and the sensor communicate wirelessly, for example using a protocol such as Bluetooth, LTE ( cellular network) Zigbee, Wi-SUN, 6LoWPAN, LoRa, SIGFOX, Telensa, near field communications, Bluetooth, BTLE, mesh (e.g., IEEE 802.15.4), WiFi (e.g., IEEE 802.15.11), communication incorporating all or any portion of IEEE 802 or similar communication standards, RFID, 3G, 4G or 5G communication, Backscatter communication, light communication, audio/sound communication, harvesting protocol communication (e.g., a metadata harvesting protocol) or UWB. Other communications protocols or combinations of communications protocols (e.g., a Bluetooth/Mesh combined protocol) can be employed. Additionally, or alternatively, an acoustic or optical broadcasting is useful. In some examples, a connection cable runs between the processor and the sensor. Using a connection cable is a preferred configuration in order to reduce costs, to permit using a single power source, and increase reliability. In some examples, the sensor is selected from one or more of a Hall sensor, a light sensor, an optical sensor, a contact point sensor, a Time of flight sensor, a flexible potentiometer sensor, a piezo sensor, a bend sensor, a capacitive sensor, a load cell, a pressure sensor or a force transducer.

In some examples the data processing apparatus comprises a radio-frequency chip comprising the memory, input terminal(s) and output terminal(s), the input terminal(s) disposed in electrical communication with output terminals of the sensor, and an antenna disposed in electrical communication with the output terminals of the chip. An interrogator may be provided, the interrogator being adapted to detect radiation associated with the data of the chip. The interrogator may be an RF or NFC protocol reader coupled with a Bluetooth^{™} capability, or a smart phone or other computing device comprising an RF or NFC capable reader.

In some examples, the sensor is located in proximity with the lock in order to detect the opening or closing of the lock. In some examples the lock comprises a first lock part and a second lock part, the sensor being attached to the first lock part, the sensor detecting proximity of the second lock part, whereby the lock is closed when the first and the second lock parts are locked together, the first lock part and the second lock part being configured to lock the container when locked together. In some examples, the consumer product comprises a magnet, the magnet being located in proximity to the lock, the sensor being configured to sense a variation in magnetic field upon opening or closing of the lock, the sensor being preferably a Hall sensor. In some examples of a lock comprising the first and second lock parts, the sensor may be attached to the first lock part and the magnet to the second lock part. In some examples, the magnet is a rare-earth magnet in order to produce an intense magnetic field while being relatively reduced in size. In some examples, the magnet is a neodymium iron boron permanent magnet. In some examples more than one magnet is used, for example, two or three or four magnets. Without wishing to be bound by theory it is that using more than one magnet can improve the overall accuracy of the sensor, and can for example permit sensing an opening direction, whereby some magnets would be displaced prior to others, such magnets being placed where an opening or closing action is starting.

In some examples, the container is a re-sealable bag, the lock is a zipper lock or a press-to-close lock, and the sensor comprises a plurality of sensors located along the zipper lock, the sensors comprising for example a flex sensor permitting detecting that the bag is open, contact point sensors permitting detecting an open configuration, a closed configuration, or a fake close configuration whereby the fake close configuration corresponds to sides of the zipper lock being adjacent without being interlocked, a flexible potentiometer permitting detecting how the user closed the bag, specifically whether a user closed by sliding or pressing, sensors configured to measure bending or flexing of a substrate (for example capacitance or resistance sensors), and a hall effect sensor permitting detecting the use of a Ziploc slider. Different sensors may indeed be used to detect different characteristics of a closing or opening action.

In some examples, the memory of the data processing apparatus of the container is configured to store the output lock data. This configuration permits using the consumer product as a standalone consumer product which permits registering consumer behavior over a period of time for example corresponding to a number of days during which the power source may operate. In some examples, the memory is configured to have a memory size and the power source is configured to have an autonomy corresponding to an expected amount of data corresponding to an expected use of the consumer product or to an amount of detergent product originally provided in the container. The stored data may be retrieved for example after depleting the consumer product from the contained detergent product, in order to analyze consumer behavior.

In some examples, the data processing apparatus further comprises a wireless networking module or a data connector, the wireless networking module or a data connector being configured to transmit the lock data to a remote data processing unit or to a remote data storage unit. In some example, the lock data is transferred from the sensor to the memory of the data processing apparatus, and from the memory of the data apparatus to the remote data storage unit or to the remote data processing unit through the wireless networking module or through the data connector being connected to a data network. The remote data processing unit or the remote data storage unit may be connected to a plurality of consumer products according to this disclosure. Such a connection to a plurality of consumer products permits for example the statistical processing of lock data over a broad consumer sample. In some examples, the remote data processing unit or the remote data storage unit is connected to more than 5 consumer products according to this description. In some examples, the remote data processing unit or the remote data storage unit is connected to more than 50 consumer products according to this description. In some examples, the remote data processing unit or the remote data storage unit is connected to more than 100 consumer products according to this description. Using a remote data processing unit may permit studies which may extend over time, and may permit starting data analysis prior to a study end date.

In some examples, the data processing apparatus is configured to produce less than 10dB preferably less than 5dB most preferably less thanldB of sound. In some examples the data processing apparatus is configured to produce less than 1 lux, preferably less than 0.1 lux, more preferably less 0.01 lux of illuminance. In some examples the data processing apparatus is configured to produce less than 10 W, preferably less than 1 W, more preferably less 0.1 W of power. In some examples, the data processing apparatus is configured to produce less than 10dB preferably less than 5dB most preferably less thanldB of sound; is configured to produce less than 1 lux, preferably less than 0.1 lux, more preferably less 0.01 lux of illuminance and is configured to consume less than 10 W, preferably less than 1 W, more preferably less 0.1 W of power. Such example configurations permit an operation which avoids or reduces the risk that a consumer would notice or be reminded of the fact that the sensing is taking place, thereby permitting an operation which corresponds to a natural operation of the lock. It was indeed found that consumers may modify their behaviour if they are aware that the sensing is taking place. In some examples, the data processing apparatus is configured to operate while producing less than 20W of heat in order to avoid a consumer noticing a heat increase due to the presence of the apparatus, and in order to avoid impacting the detergent product through excessive heat. In some examples, the data processing apparatus is configured to operate while producing less than 10W of heat. In some examples, the data processing apparatus is configured to operate while producing less than 5W of heat. In some examples, the data processing apparatus is configured to operate without producing vibration, heat, air flow due to ventilation, tactile cues or visual cues.

In some examples, the consumer product further comprises one or more additional sensors, the one or more additional sensors comprising preferably one or more of a weight sensor, a humidity sensor, a motion sensor, an electrical sensor, a resistance sensor, a capacitive sensor, an inductive sensor, a continuity sensor, a chemical sensor, an audio sensor, a microphone, a strain gauge, a pH sensor, a sensor comprising a chemiresistor polymer, a material expansion sensor, a vibration sensor or a temperature sensor. Such one or more additional sensors may advantageously rely on the same processor and memory as the processor and memory connected to the sensor configured to sense the opening or closing. Such one or more additional sensors may provide additional data such as, for example, consumption rate data, detergent product humidity data, consumer product transportation data, or detergent product temperature data. Such data may be particularly beneficial to the understanding of consumer behaviour and, in consequence, to the development of improved consumer products. Such one or more additional sensor may comprise a sensor located outside the container, for example to measure ambient temperature and/or relative humidity within the storage or use environment. In some example, the sensor located outside the container may be protected by a protecting element, such as a protecting sleeve or a protecting cover.

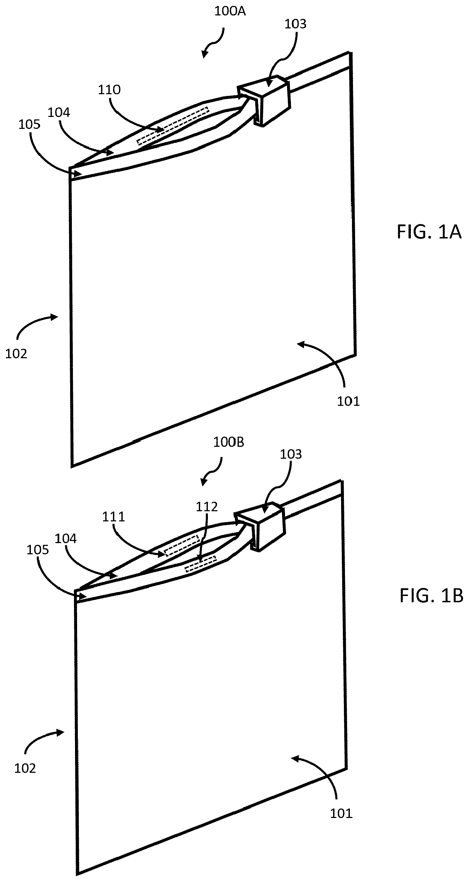

Figure 1A illustrates an example consumer product 100A according to this description. In this example, consumer product 100A comprises a bag, the bag being a flexible bag.

In this example, the bag comprises a front panel 101 and a back panel 102. In other examples, the bag may comprise more than 2 panels. In some examples, the bag comprises a bottom panel in addition to the front and back panel. In some examples, the flexible bag comprises six rectangular panels: top panel, bottom panel, front panel, back panel and two side panels. The panels may be joined together so as to form an inner volume inside the flexible bag, the inner volume corresponding to the first chamber. The joining together might be a wholly or partially heat sealed rib or can just be a folding line, or the bag might have a mixture of heat sealed ribs or folding lines. The choice for whether a base or bottom gusset is heat sealed or folded can depend on a weight of the product carried inside. Heat sealed ribs are typically preferred for light weight packages, folding for heavier weight packages. Heat sealed bottom ribs can provide additional stability upon standing which is less required for heavier products as their gravity contributes to standing stability. When heat sealing higher stresses can be created in the corners of a bottom gusset leading to a higher tear failure upon falling, this risk is less pronounced for light-weight packages as the gravity force upon falling is reduced and as such produces less stress on weakened corners. As such for light-weighed packages heat sealed ribs are more preferred to balance standing stability versus a drop failure risk, while for heavier weight packages folding is preferred. Upon manufacture, the front and back panel are heat sealed at the top covering the zipper or alternative locking mechanism to protect it during shipment. This top area is then to be torn off by the consumer over a weakened line to get access to the zipper or the alternative locking mechanism.

The inner volume may be a cuboid. Example cuboids include square cuboids and rectangular cuboids. Preferably, the cuboidal volume is a rectangular cuboidal volume. In some examples, the top panel comprises a two dimensional opening means that is capable of forming a two dimensional planar opening. In other examples, such as in the example of the bag of consumer product 100A, the front and back panel may lock the first chamber by way of a lock such as zip lock 103 for example. In some examples, the design of a zip lock might involve a coordinated action between the lock and the underlying 2-part strip. This improves robustness of the closure system against accidental opening by an accidental displacement of the lock over the 2-part strip. In some examples, the lock according to this disclosure comprises a two-part strip 104, 105, whereby the two-part strip may be pressed together for closing and separated for opening. The detergent product is contained within the first chamber which, in the case of the bag of consumer product 100A, is the space between the front 101 panel and the back 102 panel, such first chamber being accessible through the opening between the two-part strip.

In some examples, the panels are made of weldable sheet material and are secured together at the edges by weld seams. The weldable sheet material may comprise a multilayer coextruded film or a composite film that has a heat-weldable polymer layer on the inside of the flexible bag.

In some examples, a top edge of the back panel is capable of being folded over the front edge of the top panel and being fastened to the front panel. Suitable fastening means includes a clip, button, ties, adhesive labels, slider/zipper, hook and loop fasteners or hook and hook fasteners.

In some examples, the flexible box bag is a stand-up bag.

The bag may be made from a material such as a film material, suitable film material including polyethylene (PE), polyethylene terephalate (PET), amorphous polyethylene terephalate (APET), recycled amorphous polyethylene terephathalate (RPET), foamed polyethylene terephthalate (XPET), polyethylene terephthalate glycol (GPET), polypropylene (PP), high impact polystyrene (HIPS), nylon (PA), polylactic acid (PLA), thermoplastic starch (TPS), ethylvinylacetate (EVA) and any combination thereof. A preferred film material is a PET/PE laminate, and/or a PE/PE laminate. A further preferred film material is a PE/PET/PET triple layer laminate. A suitable laminate comprises an outer layer of PET having a width of from 10 to 15 micrometers, and an inner layer of PE having a width of from 50 to 200 micrometers. Other example materials comprise paper/PE laminates. The material may also comprise a metallic gloss, and/or comprise print, for example revere flexo printing. The material may comprise an outer layer finish or varnish, which may in some cases provide for a soft touch outer layer or for a mat outer layer.

A lock or reclosing means may comprise an adhesive closing panel that is capable of enclosing the opening. Suitable locks include a cap, zip, velcro fastener, slide fastener, press-to-close or a hook and loop fastener.

The bag of consumer product 100A comprises sensor 110 which is in this case inserted into strip 104 of back panel 102. In other examples, the sensor 110 may be underneath, behind, under or near a seal area or strip 104. In an example, sensor 110 is a flex sensor or a piezo electric sensor sensitive to bending. Another such flex sensor may be provided on the other side of the opening, for example in front of sensor 110. Sensor 110 thereby permits detecting a bending or flexing action consistent with the opening and closing of the bag 100A by a consumer. In an example, sensor 110 is a soft potentiometer, in other words a thin and flexible variable resistor strip which detects an applied pressure, the resistance of the strip varying in function of the pressure. In these examples, the sensor may be located along the strip 104. The sensor is connected to a processor and memory which are not visible on Figure 1. The processor and memory may for example be placed at the bottom of the bag and be connected by wires to the sensor 110. In some examples, such a bag comprises one or more of a weight sensor, a humidity sensor, a motion sensor, or a temperature sensor placed or distributed in the bag, for example in order to track detergent consumption or to understand storage condition.

Figure 1B illustrates another example consumer product 100B. Consumer product 100B comprises elements already described in the context of example consumer product 100A, which are numbered using the same reference numerals. In this example consumer product 100B, the bag comprises a Hall sensor 111 and a permanent magnet 112, whereby the Hall sensor and the permanent magnet are in close proximity when the lock is closed, and apart when the lock is open. In some examples, more than 1 Hall sensor is provided, for example 2, 3, 4 or more Hall sensors. In some examples, more than 1 magnet is provided, for example 2, 3, 4 or more magnets. Without wishing to be bound by theory it is believed that an increased number of magnets and Hall sensors improves the accuracy of the data sensing. The sensor is connected to a processor and memory which are not visible on Figure 1B and may for example be glued on a side of the bag and be connected by wires to the sensor 111. In some examples, such a bag comprises one or more of a weight sensor, a humidity sensor, a motion sensor, or a temperature sensor placed or distributed in the bag, for example in order to track detergent consumption or to understand storage conditions.

The sensor configured to sense the opening or closing of the first chamber may in some examples span a plurality of contact points, for example 2, 3, 4, 5, 6, 7, 8, 9, 10 or more than 10 contact points, such contact point being placed along an opening of the first chamber cooperating with the lock. In some examples, a contact point functions as a switch, being for example "on" (closed circuit) when in contact with an object, and "off (open circuit) when not in contact with such object. A difference between a Hall sensor and a contact point sensor is that a Hall sensor provides a continuous measure, whereas a contact point sensor provides a binary on/off measure. Using this or other combinations of binary sensor or continuous measurement sensor (which may be Hall or otherwise) may be preferred in order to facilitate analysing a consumer behaviour. A continuous measurement sensor output may be compared to one or more predefined threshold, for example voltage thresholds, as part of such analysis.

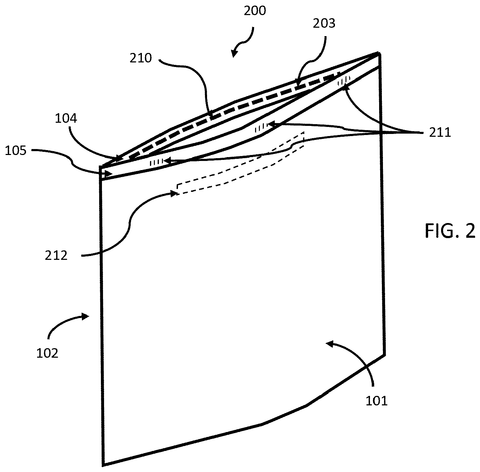

Figure 2 illustrates another example consumer product 200. Consumer product 200 comprises elements already described in the context of example consumer product 100A or consumer product 100B, which are numbered using the same reference numerals. In this example consumer product 200, the bag is a press-to-close bag whereby the two-part strip may be open or closed by pressing the strips 104 and 105 into contact, the press-to-close lock comprising one or more press-to-close tracks facing each other and interlocking the strips 104 and 105 when pressed against each other. An opening force for such a press-to-close bag may for example be of more than 8N and of less than 18N. Example consumer product 200 comprises, in order to track or detect opening and closing, a combination of sensor comprising a flexible linear potentiometer 210 placed along one or both strips 104 and 105, a plurality of contact points 211, for example 3 to 5 contact points spread along one or both of strips 104 and 105, and one or more flex sensors 212 placed in this example parallel to the strips 104 and 105 and below the strips 104 and 105.

Such a combination of sensors being a combination of binary (contact points or other "switch" type sensors) and continuous (potentiometer, Hall or flex for example) sensors provides substantial data and may be provided on other bags or other container types, such as bag 100A or bag 100B for example. This permits for example detecting if a bag is closed by sliding or by pressing at several points along the strips, or detecting a direction along which closure took place. Preferred is the inclusion of a flex sensor which detects if the walls or panels are open or closed through an impedance change when flexed, for example translating in a drop in voltage output when flexed. Such a flex sensor was found to output a characteristic sharp spike when a bag was properly sealed. Such a flex sensor was found to indicate a time required to open or close a bag by detecting flexing activity around the characteristic sharp spike. Contact point sensors were found to be particularly useful in indicating state of closure, being partial or complete, which part of a bag may be closed first, and/or how quickly a bag is closed.

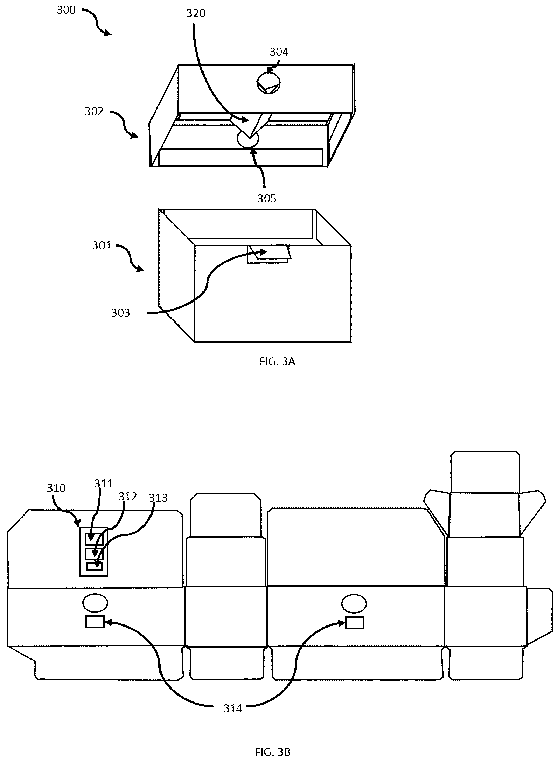

Figure 3A illustrates another example consumer product according to this disclosure. The consumer product comprises a container 300 and a detergent product (not shown) contained in the container. The container 300 comprises a box 301 and a lid 302. The box 301 defines the first chamber containing the detergent product. Container 300 comprises a lock comprising a tab 303 which may be engaged or disengaged through an actuation aperture 304. In this example, the lock further comprises a further tab aligned with an actuation aperture 305, the tab aligned with actuation aperture 305 being on a side of the box opposite a side of the box where tab 303 is placed.

Figure 3B illustrates a blank of the lid 302, which permits illustrating components otherwise not visible on Figure 3A.

Container 300 comprises a data processing apparatus 310 comprising a processor 311, a power source 312, a memory 313, and a sensor 314 which in this case comprises two hall sensors. When the lid 302 is folded, the processor, power source and memory are located within a second chamber 320 of the container. This second chamber thereby defining a second volume, the second chamber comprising at least part of the data processing apparatus, in this case the processor, power source and memory. In other examples, a second chamber may contain one or more of the processor, power source, memory or sensor or additional sensor according to this disclosure. In this example, when the lid is in a closed position, the sensors 314 are located in proximity to the tabs such as tab 303, for example less than 2cm away from the respective tab, for example less than 1 cm away from the respective tab. Components of the data processing apparatus such as the processor, memory, power source and sensor may be interconnected by wires which are not represented here. The hall sensors would, in the example illustrated, detect a variation in magnetic field produced by a change of position of magnets located for example below the tab 303 and below the further tab. In some examples, one or more magnet may be inserted in a material forming the container, such as cardboard, and may be for example held by glue or by a sticker, for example in order not to mechanically interfere with a tab or lock operation.

The second chamber may permit protecting at least part of the data processing apparatus, for example from a contact with the detergent product or from humidity which may otherwise damage the data processing apparatus. Such a second chamber may thereby define a second volume smaller than a first volume defined by the first chamber comprising the detergent product. In some examples, the second volume being of less than 25% of the first volume. In some examples, the second volume being of less than 15% of the first volume. In some examples, the second volume being of less than 10% of the first volume. In some examples, the second volume being of less than 5% of the first volume. In some examples, the second volume being of less than 1% of the first volume. In some examples, the first chamber and the second chamber are preferably at least partially separated by a cardboard layer, by a plastic resin layer, a metallic layer, a three dimensional, 3D, printed layer, a computer numerical control, CNC, milled layer or by a combination of the these. In the example illustrated in Figures 3A and 3B, the first and second chambers are separated by a cardboard layer, preferably a fluted cardboard layer or a thick paperboard layer, to add further protection to the data processing apparatus.

In the example illustrated on Figures 3A and 3B, the second chamber serves to house part of the data processing apparatus, and further serves as a support element participating in the lock 303 by acting as support element when pressure is applied on the tabs of the lock when the lid is closed. Indeed, as illustrated in Figures 3A and 3B, container 300 comprises a second chamber 310, the container comprises a lid 302, the lid comprising a cavity, the second chamber 320 comprising the cavity. In some example, such as the example illustrated in Figures 3A and 3B, the cavity being comprised in a support element of the lid.

In some examples, the second chamber may be comprised at least partially at a base element of the container. In some examples, the second chamber may be comprised at least partially on a side element of the container.

In the example of container 300, as could also be the case for bag or tub containers, the lock is configured to be a childproof lock. In this example, the second chamber participates both to the functionality of the childproof lock as a support element of the childproof lock and as a housing for at least part of the data processing apparatus which will permit evaluating the opening and closing behavior of the consumers with this same childproof lock, thereby synergistically fulfilling several functions. In other examples, the lock is not a childproof lock.

In the example illustrated in Figures 3A and 3B, and in other examples not illustrated here, the container comprises, as part of the lock to permit opening or closing the first chamber, a tab and an actuator which may be connected to a specific portion of sidewalls of the box, which may be a specific portion covered by at least a portion of flanks of the lid when the lid is in the closed position, the actuator abutting against a locking tab of the flanks when in the locking position, the actuator being maintained away from the locking tab when in the opening position, the actuator being displaceable by an actuation pressure by an unlocking displacement distance in a direction normal to the specific portion of the sidewalls. The connection of the actuator to the specific portion of the sidewall is due to the actuator participating in locking or unlocking the specific portion of the sidewall from the portion of the flanks covering the specific portion of the sidewall, thereby permitting releasing the lid from the box. The flanks of the lid may comprise a locking tab. A locking tab should be understood as a mechanical element which interlocks with the actuator. In some examples the locking tab extends away from the flanks and may be in the form of a bulge, a ridge, an embossment or an additional material layer sticking out of the flanks of the lid and towards the specific portion of the side wall such that the actuator may abut against the tab when in the locking position to prevent separating the specific portion of the sidewalls from the flank in the area of the actuator. In some examples, the locking tab is comprised in the flank itself, the locking tab being for example formed by an aperture in the flanks. Abutment according to this disclosure should be understood as a contact between the actuator or part of the actuator and the tab, such contact preventing opening of the lid. The actuator is maintained away from the locking tab when in the opening position, in order to release the locking tab. Such release of the locking tab permits opening the lid. Displacement or movement of the actuator from the locking to the opening position is by application on the actuator (directly or indirectly) of an actuation pressure or force such that the actuator is displaced by a distance sufficient to supress contact of the actuator with the locking tab, such distance corresponding to the displacement distance, in a direction normal to the specific portion of the side wall. It should be understood that the force or pressure leading to the displacement may have a number of different directions, such different directions contributing to the displacement if a component of such force or pressure is in a direction normal to the specific portion of the side wall, for example through apertures 304 and 305. Such force or pressure may also comprise a component which may be parallel to the side wall. The actuation is however triggered by a component of such force or pressure being normal to the portion of the side wall. Such presence of a component normal to the portion of the sidewall participates in the role of the lock of avoiding an accidental opening by lifting the container through lifting the lid by applying a force parallel to the sidewall, whereas desired opening would take place by the consumer "pushing" the actuator and apply the unlocking force or pressure permitting opening of the lid. In other words, while a consumer may apply a force on the actuator along a direction which may not be normal to the sidewall, if a component of such force is normal to the sidewall such component may participate in applying the pressure leading to the displacement. In some examples, sensor to sense the opening or closing according to this disclosure may generate an output related to a displacement of the actuator, thereby permitting sensing the related actuation.

Such a lock would participate in suppressing or reducing the risk of accidental opening of the lid while permitting desired opening by a consumer, the functioning of such a lock depending on ensuring that the actuator maintains abutting against the locking tab even in case of pulling strongly on the lid in a direction parallel to the side wall in order to transport or lift the consumer product. The avoidance or reduction of the risk of accidental opening would also apply to a force being applied in a direction parallel to the sidewalls for example by friction with another box located side to side with a box according to this disclosure, or by a box falling over during transportation, or by internal movements of the content of the box pushing the lid during transportation. Strong pulling in a direction parallel to the sidewall may however impact the structure of the sidewall, for example resulting in bending of the side wall, whereby such bending may produce undesired disengagement of the locking tab from the activator, due to the fact that the actuator is connected to the specific portion of the sidewall. This would lead to an undesired opening of the lid. Such undesired opening of the lid may be more likely if the sidewall is made of a material such as cardboard used to form the sidewalls, in particular when the box is a cardboard box.

In some examples, the lock is placed in a central area of a sidewall of the box. A central area should be understood as substantially equidistant from opposite edges of the sidewall concerned, such edges being along a direction normal to the base of the box. In such examples, it should be understood that the lock is located closest to an edge of the sidewall close to the opening than to an edge of the sidewall close to the base, while being in a central area in respect to the edges normal to the base. Such central location of the lock may participate in avoiding sliding of the lid from the box if the box is lifted by holding the lid by applying pressure onto the actuator, whereby such pressure presses the actuator against the support element structure centrally, thereby balancing the forces maintaining the connection between the lid and the box and participating in avoiding accidental opening. In some examples, the lock may be located on a sidewall and between two edges of the sidewall, such edges being normal to the base, the lock being closer to one edge than to the other edge of the two edges, for example located closer to the one edge at a 1/3 of the distance between the two edges. In some examples one sidewall may comprise two locks. In some examples two locks may be provided offset versus each versus a centreline to increase a distance separating the two locks. In some examples more than two locks may be provided. In some examples, three locks are provided, for example corresponding to a first lock for a thumb of a user hand and two other locks on the other side of the lid for an index and middle finger of the same user hand so such user may actuate the three locks one handed and simultaneously. Such a configuration aims at resolving an apparent contradiction between, on one hand, the use of materials for the sidewalls which would resist accidental opening, and the use of materials for the sidewalls which are particularly environmentally friendly.

The container 300 or some other example containers may be made from rigid cardboard material, flexible cardboard material or a mixture thereof. In some example, the material forming the box or the lid has a wall thickness of more than 220 microns and of less than 3mm. In some example, the material forming the box or the lid has a wall thickness of more than 1mm and of less than 2mm. In some example, the material forming the box or the lid is folded on itself, for example to reinforce parts of or the whole of the box or the lid. The container may be made from paper materials, bio based material, bamboo fibres, cellulose fibres, cellulose based or fibre based materials, or a mixture thereof. The container may be made from materials comprising recycled materials, for example recycled cellulose fiber based materials. The container may be made from materials comprising a reduced weight % of PE, for example to reduce or prevent moisture progression across both sides of the container.

The lid 302 or some other example lids comprise a support element structure 320 defining the second chamber, the support element structure entering the opening when the lid is in the closed position, at least part of the specific portion of the sidewalls being located between the flanks of the lid and the support element structure when the lid is in the closed position, a clearance distance separating the sidewalls from the support element structure in a direction normal to the specific portion of the sidewalls when the lid is in the closed position and when no actuation pressure is applied, the clearance distance being reduced to zero by flexing of the specific portion of the sidewalls when the actuation pressure is applied above a pressure threshold when the lid is in the closed position. Both the support element structure and the flanks are structurally part of the lid, the support element structure and the flanks permitting sandwiching the specific portion of the sidewall, thereby preventing sinking in of the specific portion of the sidewall and undesired disengagement of the actuator from the locking tab. It is important to take note of the fact that in case of an actuation pressure being applied while lifting the box through the lid, the pressure applied will catch the sandwiched specific portion of the sidewall against the support element structure, thereby compensating a force of gravity which would otherwise disconnect the lid from the box, such compensation of the gravity force being through a resisting static friction force between the specific portion of the sidewall and the support element structure. In some examples, the use of the support element structure permits using for making the box a relatively flexible material, whereby such flexible material would flex in the absence of the support element structure to the point that the box would fall off if lifted by its lid. Permitting using a relatively flexible material also permits using a lesser quantity of such material due to the presence of the support element structure which compensates for such flexibility. The presence of such support element structure thereby prevents or reduces the risk of accidental opening even if the actuation pressure is applied onto the actuator of the lock, for example as the box is lifted while applying pressure on the actuator of the lock.

The support element structure enters the opening when the lid is in the closed position, fitting within the box when the lid is in the closed position. Such entering the opening should be understood in that the support element structure comprises a support element structure portion which enters the opening when the lid is moved from the open to the closed position, and whereby such support element structure portion exits the opening when the lid is moved from the closed to the open position. At least part of the specific portion of the sidewalls is located between the flanks and the support element structure when the lid is in the closed position. This structure permits capturing the specific portion of the sidewall between the flanks and the support element structure, the specific portion of the sidewall getting inserted between the flanks and the support element structure when the lid moves from the open to the closed position, the specific portion of the side wall being released from between the flanks and the support element structure when the lid moves from the closed to the open position. A clearance distance separates the sidewalls from the support element structure in a direction normal to the specific portion of the sidewalls when the lid is in the closed position, such direction corresponding for example to a direction of the linear ridge, and when no actuation pressure is applied. Such clearance distance would exist on a first side, and be repeated additionally on a second side of the support element structure. Such clearance distance permits insertion of the support element structure through the opening as the lid gets closed, such that the support element structure does not collide with the specific portion of the sidewall when the lid gets closed. The clearance is reduced to zero by flexing of the specific portion of the sidewalls when the actuation pressure is applied above a pressure threshold when the lid is in the closed position. When such pressure threshold is reached, the sidewall lays against the support element structure through the clearance distance being reduced to zero, the sidewall thereby being prevented from being exceedingly distorted and being prevented from sinking in to the point of the actuator releasing the locking tab. The clearance distance according to this disclosure relates in some examples to a tolerance distance between the lid and the box which both permits placing the lid onto the box without undue difficulty, while avoiding that the lid be loose when in the closed position. While the clearance distance according to this disclosure is considered in a region of the lock, the tolerance distance between the lid and the box may be considered along an entire perimeter of the opening of the box. In some examples, the tolerance is of at least 0.1 mm and of less than 5 mm. In some examples the tolerance is of at least 1mm and of less than 3 mm. Such tolerance would for example be measured when the lid is in the closed position and between an internal surface of the flanks and an external surface of the sidewalls, understanding that such tolerance may take a different value in a region of the lock. In some examples, the clearance distance is of at least 1mm and of less than 1cm when the lid is in the closed position and no actuation pressure is applied. Such a range permits both easing the closing of the lid and preventing sinking of the specific portion of the sidewall leading to undesired unlocking. In some examples, the clearance distance is of at least 1.5mm and of less than 0.5cm when the lid is in the closed position and no actuation pressure is applied. In some examples, the clearance distance is of at least 2mm and of less than 0.4cm when the lid is in the closed position and no actuation pressure is applied.

In the example of container 300, the lid and box are a cardboard lid or box. One should note that other examples may comprise a plastic lid and tub.

A cardboard lid, box or blank may be made from paper or cardboard materials wherein the paper material is for example selected from paperboard, cardboard, laminates comprising at least one paper board or cardboard layer, cellulose pulp materials, a PE layer or a mixture thereof. The material used to make the blank, lid, box or container may comprise other ingredients, such as colorants, preservatives, plasticisers, UV stabilizers, Oxygen, perfume, recycled materials and moisture barriers or a mixture thereof. The blank, lid, box or container may comprise areas of external or internal printing. The blank, lid, box or container may be made for example by cardboard making. Suitable cardboard blank, lid, box or container manufacturing processes may include, but are not limited to, tube forming from a flat cardboard or paper sheet with a gluing step, folding or a mixture thereof. The cardboard blank, lid, box or container is opaque, for example to protect content from external light. In some examples the blank, lid, box or container is constructed at least in part and in some specific examples in its entirety from paper-based material. By paper-based material, we herein mean a material comprising paper. Without wishing to be bound by theory, by 'paper' we herein mean a material made from a cellulose-based pulp. In some examples, the paper-based material comprises paper, cardboard, or a mixture thereof, wherein preferably, cardboard comprises paper-board, corrugated fiber-board, or a mixture thereof. Corrugated fiberboard comprises a series of flutes. Each flute can be understood to be a channel. The flutes run parallel to one another, with the flute direction being the direction travelled along each channel. The paper-based material may be a laminate comprising paper, cardboard, or a mixture thereof, wherein in some examples, cardboard comprises paper-board, corrugated fiber-board, or a mixture thereof, and at least another material. In some examples, the at least another material comprises a plastic material. In some examples, the plastic material comprises polyethylene, polyethylene terephthalate, polypropylene, polyvinylalcohol or a mixture thereof. In some examples the plastic material comprises a copolymer of ethane and vinyl alcohol, or EVOH. A barrier material may be used as the at least another material. The barrier material may be a biaxially orientated polypropylene, a metallised polyethylene terephthalate or a mixture thereof. The at least another material may comprise a wax, a cellulose material, polyvinylalcohol, silica dioxide, casein based materials, or a mixture thereof. In some examples, the paper-based laminate comprises greater than 50%, preferably greater than 85%, and more preferably greater than 95% by weight of a laminate of fiber-based materials. In some examples, the barrier material may comprise plastic material having a thickness of between 10 micron and 40 micron. In some examples, the barrier material may comprise plastic material having a thickness of between 10 micron and 35 micron. The paper-based material may be a laminate. In some examples, the internal surface of a blank, lid, box or container comprises paper, cardboard, or a mixture thereof, wherein, in specific examples, cardboard comprises paper-board, corrugated fiber-board and lamination of polyethylene, or a mixture thereof, and, in some examples, the external surface of the blank, lid, box or container or a combination thereof comprises the at least another material. Alternatively, the at least another material might also be laminated in-between two paper-based material layers. Without wishing to be bound by theory this at least another material might act as a barrier for leaked liquid absorbed by the paper-based material facing the interior side of the blank, lid, box or container, to prevent or reduce a contaminating flow through a wall of the blank, lid, box or container. Other structures may be found efficient to avoid leakage from the content or to protect the content from external fluids, for example from a shower, a sink, or by handling the container or the lid with wet hands. Contamination of a wall, flap or panel of the blank, lid, box or container might be unsightly to consumers or may contaminate the storage area. Other structures might be found efficient to avoid exposure of the enclosed detergent product towards outside relative humidity. This is of special importance if the enclosed detergent product is sensitive to humidity by nature such as for example water soluble unit dose detergent articles in which a detergent composition is enclosed in a water soluble film, the water soluble film being sensitive to premature rupture when exposed to higher percentages of outside relative humidity. In some examples, the blank, lid, box or container is made of a paper-based material comprising the at least another material laminated in between two corrugated fiberboard layers. In some examples, the material used for the blank, lid, box or container comprises a core cardboard flute material sandwiched between two plain cardboard layers and polyethylene laminate. A cardboard box, lid or blank according to this disclosure may be made from or comprise recycled material or recycled cellulose fibres.

In some examples, the container is a tub. The tub may have an overall straight shape, e.g. with straight sides, or may have a curved shape or may comprise both straight and curved elements. The tub may comprise flat surfaces as well as surfaces comprising embossments or other structural element, e.g. designed to improve gripping or structural integrity. Preferably the tub has a rectangular shape when viewed from the top of the bottom. The tub may be made from any suitable material. The tub may be made of natural materials, synthetic materials or a mixture thereof, preferably synthetic materials, more preferably plastic. The tub may be made from materials comprising recycled materials. The tub may be made from a plastic material, preferably a polyolefin material. The tub may be made from polypropylene, polystyrene, polyethylene, high-density polyethylene, polyethylene terephthalate, polyvinyl chloride, Acrylonitrile Butadiene Styrene, Polycarbonates, Polyamides or a mixture thereof. Preferably, the tub may be made from polypropylene, polystyrene, high-density polyethylene, polyethylene terephthalate, or a mixture thereof. The tub comprises a base. When at rest the base is located on the underside of the tub as it rests on a surface. The base may be substantial flat, that is to say not comprising areas that are substantially raised versus other areas. Alternatively, the base may comprise a raised area. This has the benefit of creating a reservoir within the tub which can catch any leaked detergent composition from ruptured unit dose articles. A second chamber according to this disclosure may be at least partially comprised in such reservoir to house one or more components of the data processing apparatus. The tub comprises an opening positioned opposite to the base. At least one wall extends vertically from said base to said opening. By vertically in this context we herein mean approximately vertical. In other words, the wall does not to extend from the base at an angle of exactly 90° rather there can be variation either side of exactly 90°. Those skilled in the art will understand what relevant variation there can be. The wall may extend from the base at an angle between 75° and 105°, preferably between 80° and 100°, more preferably between 85° and 95° relative to the base. Preferably the tub comprises at least 2 walls, preferably at least 3 walls, most preferably at least 4 walls extending between said base and said opening. Preferably the tub comprises 4 walls so that the tub has an overall square or rectangular shape. The at least one wall terminates in an upper edge of said at least one wall. The upper edge should be understood to be top of the at least wall. The upper edge is preferably horizontal such that it is parallel to the base. However, the upper edge does not have to be completely horizontal, for example it can have elevated areas or run with a substantially diagonal direction. The width of the upper surface may correspond to the thickness of the at least one wall. However, the upper surface may be thinner or thicker than the at least one wall. The upper surface may comprise different thickness within the same tub. The thickness of the upper surface of one wall may differ to the thickness of the upper surface of another wall on the same tub. The thickness of the upper surface may be between 1mm and 8mm, preferably between 2mm and 6mm. The tub also comprises a lid. The lid is able to move from an open to closed position via a hinge. When in the closed position, the lid covers the opening. The tub comprises at least one locking means, or lock. Preferably, the tub comprises at least two locking means. Preferably, the at least two locking means are spaced apart by a distance of from 50mm to 180mm. The at least two locking means might be present on the same wall or on different walls, preferably on the same wall. Preferably the tub comprises two locking means, as such fitting the number of consumer hands and enabling the consumer to open the tub in a coordinated motion. The interaction of a lid component and the wall component results in the locking means being engaged and the lid being secured in a locked position. A sensor according to this disclosure may be provided in proximity to the locking means in order to detect that the tub is closed. In some examples, the sensor is a Hall sensor located on a wall in proximity to the opening, a magnet being located on the lid, such that the magnet and the sensor are placed less than 5cm away, preferably less than 2 cm away, most preferably less than 1 com away when the lid is closed.

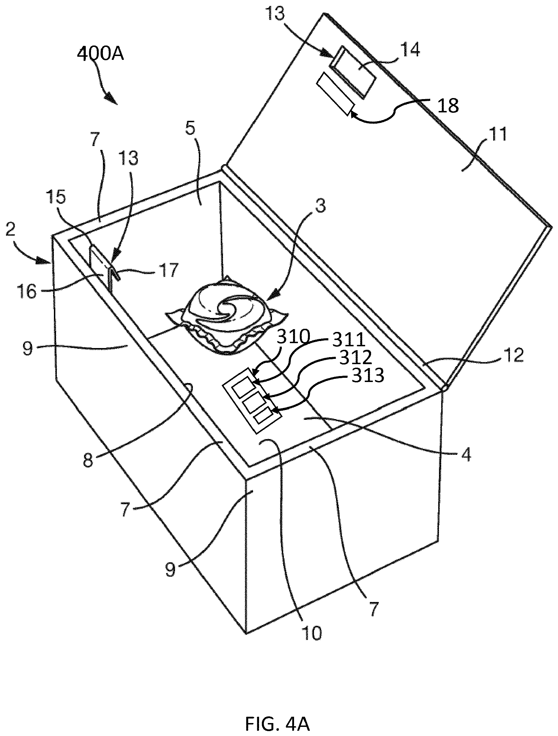

Figure 4A illustrates an example consumer product 400A according to this disclosure. The consumer product 400A comprises a container 2 which is a tub and at least one water-soluble unit dose article 3 contained therein. Said tub 2 comprises a base 4, an opening positioned opposite to the base 4 and at least one wall 5 extending vertically from said base 4 to said opening. Said at least one wall 5 terminates in an upper edge 7 of said at least one wall 5, and wherein said wall 5 comprises an inner surface 8 and an outer surface 9. Said base 4 and the at least one wall 5 define an internal compartment 10 or first chamber wherein the internal compartment 10 is accessible from the opening. The container also comprises a lid 11 able to move from an open to closed position via a hinge 12 and wherein when in the closed position covers the opening.

The container 2 comprises at least one lock or locking means 13, wherein the locking means 13 comprises a lid component 14 and a wall component 15. The wall component 15 comprises a support member 16 extending from the upper edge 7 of the at least one wall 5 or the inner surface 8 of the at least one wall 5, and a hook member 17. When the lid 11 is in a closed position, the hook member 17 engages the lid component 14 such that only application of force to the hook member 17 will disengage the wall component 15 from the lid component 14. The hook member 17 extends from the support member 16 towards the interior 10 of the container such that to disengage the wall component 15 from the lid component 14 requires application of force to the hook member 17 wherein the application of force is in the direction towards the inner surface 8. The outer surface 9 of the at least one wall 5 is devoid of any locking means. The container is opaque, translucent or a mixture thereof and made from polypropylene, polystyrene, high-density polyethylene, polyethylene terephthalate, or a mixture thereof.

Similarly as for the container 300 of Figures 3A-B, the container 2 comprises a data processing apparatus 310 comprising a processor 311, a power source 312, a memory 313, and a sensor (not visible) which in this case comprises a hall sensor located on hook member 17 and connected to the data processing apparatus 310 by a wire (not represented here). The data processing apparatus is in this case located on the base 4 of the container (the data processing apparatus could also be placed for example on a sidewall). In some examples, the data processing is covered by a cover (not illustrated here) which protects the data processing apparatus from the content of the container. In some examples, such protecting cover (which may also be used in the case of a bag or cardboard box for example) is made from the same material as the material of the base, lid or sidewall on which or against which the data processing apparatus is located in order to appropriately protect the data processing apparatus and ease manufacture. A space between the protecting cover and the base, lid or sidewall on which or against which the data processing apparatus is placed is comprised in a second chamber according to this disclosure. The consumer product 400A further comprises a magnet 18 located in proximity to the lid component 14, interacting with the Hall sensor located on hook member 17 to detect closure of the lid 11. In some examples, the data processing apparatus is located under a "fake bottom" which prevents a consumer from interfering with the data processing apparatus. In some examples, a cut or slot is provided at a base of the container in order to provide access to the data processing apparatus, for example in order to load a software. Such cut or slot may be covered by a sticker or label when not in use.

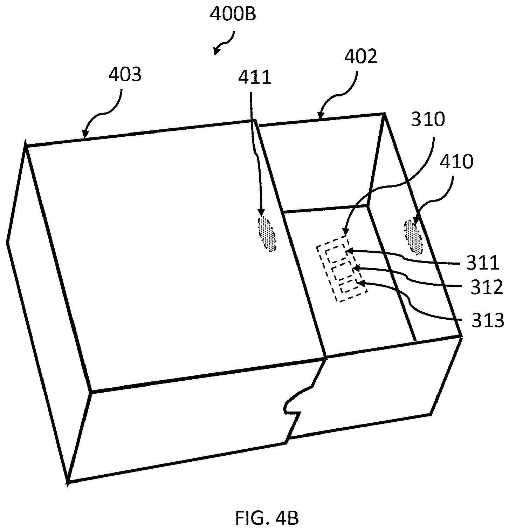

Figure 4B illustrates an example consumer product 400B according to this disclosure. The consumer product 400B comprises a container, the container comprising a plastic or cardboard drawer 402 defining the first chamber for containing a detergent product. In this example, the lock is in the form of a sleeve 403 which may slide the drawer 402 open or closed, thereby opening or closing the first chamber. Example consumer product 400B comprises a data processing apparatus 310 as described for example in the context of Figures 3 or 4A. Example consumer product 400B comprises, to sense the opening or closing, a magnet 410 and a Hall sensor 411. In this example, magnet 410 may for example be inserted between layers or glued to a layer of the drawer. In this example, sensor 411 may for example be inserted between layers or glued to a layer of the sleeve. In this example, data processing apparatus 310 may for example be inserted between layers or glued to a layer of the drawer, for example of a base of the drawer. Alternatively, data processing apparatus 310 may be located in a space, or second chamber according to this disclosure, between a back wall of the drawer and the back wall of the sleeve opposite the opening.

The consumer product comprises a detergent product. In some examples, the detergent product comprises water soluble articles, preferably water soluble unit dose articles, even more preferably flexible water soluble unit dose articles.

In some examples, the consumer product comprises at least one water-soluble unit dose article and the container. The consumer product can be sold 'as is', in other words the consumer product is the item that the consumer picks up from the shelf. Alternatively, the consumer product could be housed as one unit of a multi-component product. For example, more than one consumer product could be housed within an outer package and the multiple packaged consumer products sold together in a single purchase. The consumer product may comprise aesthetic elements, for example shrink sleeves or labels attached to the container. Alternatively, the container may be coloured or printed with aesthetic elements or informative print such as usage instructions.

In some examples a water-soluble unit dose article comprises at least one water-soluble film orientated to create at least one-unit dose internal compartment, wherein the at least one-unit dose internal compartment comprises a detergent composition. The water-soluble film and the detergent composition are described in more detail below. In some examples the consumer product comprises at least one water-soluble unit dose article, in some cases at least two water-soluble unit dose articles, in some cases at least 10 water-soluble unit dose articles, in some cases at least 20 water-soluble unit dose articles, in some cases at least 30 water-soluble unit dose articles, in some cases at least 40 water-soluble unit dose articles, in some cases at least 45 water-soluble unit dose articles. A water-soluble unit dose article is in some examples in the form of a pouch. A water-soluble unit dose article comprises in some examples a unitary dose of a composition as a volume sufficient to provide a benefit in an end application. The water-soluble unit dose article comprises in some examples one water-soluble film shaped such that the unit-dose article comprises at least one internal compartment surrounded by the water-soluble film. The at least one compartment comprises a cleaning composition. The water-soluble film is sealed such that the cleaning composition does not leak out of the compartment during storage. However, upon addition of the water-soluble unit dose article to water, the water-soluble film dissolves and releases the contents of the internal compartment into the wash liquor. The unit dose article may comprise more than one compartment, at least two compartments, or at least three compartments, or at least four compartments, or even at least five compartments. The compartments may be arranged in superposed orientation, i.e. one positioned on top of the other. Alternatively, the compartments may be positioned in a side-by-side orientation, i.e. one orientated next to the other. The compartments may be orientated in a 'tyre and rim' arrangement, i.e. a first compartment is positioned next to a second compartment, but the first compartment at least partially surrounds the second compartment, but does not completely enclose the second compartment. Alternatively, one compartment may be completely enclosed within another compartment. In some examples the unit dose article comprises at least two compartments, one of the compartments being smaller than the other compartment. In some examples the unit dose article comprises at least three compartments, two of the compartments may be smaller than the third compartment, and in some examples the two smaller compartments being superposed on the larger compartment. In some examples the unit dose article comprises at least four compartments, three of the compartments may be smaller than the fourth compartment, and in some examples the three smaller compartments being superposed on the larger compartment. The superposed compartments are in some examples orientated side-by-side. In some examples each individual unit dose article may have a weight of between 10g and 40g, or even between 15g and 35g. The water soluble film may be soluble or dispersible in water. Prior to be being formed into a unit dose article, the water-soluble film has in some examples a thickness of from 20 to 150 micron, in other examples 35 to 125 micron, in further examples 50 to 110 micron, in yet further examples about 76 micron. Example water soluble film materials comprise polymeric materials. The film material can, for example, be obtained by casting, blow-moulding, extrusion or blown extrusion of the polymeric material. In some examples, the water-soluble film comprises polyvinyl alcohol polymer or copolymer, for example a blend of polyvinylalcohol polymers and/or polyvinylalcohol copolymers, for example selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer. In some examples water soluble films are those supplied by Monosol under the trade references M8630, M8900, M8779, M8310. In some examples the film may be opaque, transparent or translucent. The film may comprise a printed area. The area of print may be achieved using techniques such as flexographic printing or inkjet printing. The film may comprise an aversive agent, for example a bittering agent. Suitable bittering agents include, but are not limited to, naringin, sucrose octaacetate, quinine hydrochloride, denatonium benzoate, or mixtures thereof. Example levels of aversive agent include, but are not limited to, 1 to 5000ppm, 100 to 2500ppm, or 250 to 2000ppm. The water-soluble film or water-soluble unit dose article or both may be coated with a lubricating agent. In some examples, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

In some examples the container comprises a first part comprised in the first chamber, wherein the first part comprises a first compartment in which the at least one water-soluble unit dose article is contained. In some examples the first compartment comprises at least two water-soluble unit dose articles. The first compartment may comprise between 1 and 80 water-soluble unit dose articles, between 1 and 60 water-soluble unit dose articles, between 1 and 40 water-soluble unit dose articles, or between 1 and 20 water-soluble unit dose articles. The volume of the first compartment may be between 500ml and 5000ml, in some examples between 800ml and 4000ml.

Figure 5A illustrates an example method 500A of storing lock data output by a sensor of a consumer product according for example to consumer products hereby described. Such a method should be understood as a computer implemented method implemented on a processor. The storing should be understood as storing on a memory or data storage as hereby described. The lock data output by the sensor may for example be represented analogically by a voltage level, or digitally by data bits.

Example method 500A comprises, in block 501, sensing, by the sensor, the opening of the lock. Such sensing may take place in various manners, including by detecting a magnetic field modification as per example of Figures 3A or 3B, or by piezo electric or soft potentiometer output. The sensing may comprise comparing a sensor output with a predetermined lock opening threshold.

Example method 500A comprises, in block 502, in response to the sensing of the opening, producing opening time lock data. Such data may for example be digital data produced by the processor based on analogical sensor output. Such opening time lock data may comprise a time stamp and an indicator associating the detection of an opening action with a time of the time stamp. In some examples, lock data further comprises data such as location, speed or acceleration data, each for example along 3 (x, y, z) directions.

Example method 500A comprises, in block 503, sensing, by the sensor, the closing of the lock. Such sensing may take place in various manners, including by detecting a magnetic field modification as per example of Figures 3A or 3B, or by piezo electric or soft potentiometer output. The sensing may comprise comparing a sensor output with a predetermined lock closing threshold. In some examples, a lock closing threshold value and a lock opening threshold value may differ by more than 10% of a nominal sensor output value, in order to reliably detect such opening and closing. In some examples, a lock closing threshold value and a lock opening threshold value may differ by more than 20% of a nominal sensor output value. In some examples, a lock closing threshold value and a lock opening threshold value may differ by more than 30% of a nominal sensor output value. In some examples, a lock closing threshold value and a lock opening threshold value may differ by more than 40% of a nominal sensor output value. In some examples, a lock closing threshold value and a lock opening threshold value may differ by more than 50% of a nominal sensor output value. A relatively large difference between such threshold value may permit avoiding detecting false opening or closing actions. A relatively reduced difference between such openings may permit a higher sensitivity. In some examples, additional intermediate threshold values are defined between the opening and the closing threshold values in order to detect handling of the lock such as a failed opening attempt or a failed closing attempt.

Example method 500A comprises, in block 504, in response to the sensing the closing, producing closing time lock data. Such data may for example be digital data produced by the processor based on analogical sensor output. Such closing time lock data may comprise a time stamp and an indicator associating the detection of a closing action with a time of the time stamp.

Figure 5B illustrates another example method 500B of storing lock data output. Example method 500B comprises blocks 501-504 which have been described in the context of example method 500A. Example method 500B further comprises block 505 of producing a closed or open lock duration lock data. Closed lock duration lock data may be obtained by measuring a time between sensing a closing and sensing an opening following directly the closing. Closed lock duration lock data may be obtained by subtracting a time of an opening time directly following a closing time, and the time of the closing time directly preceding the opening time. Open lock duration lock data may be obtained by measuring a time between sensing an opening and sensing a closing following directly the opening. Open lock duration lock data may be obtained by subtracting a time of a closing time directly following an opening time, and the time of the opening time directly preceding the closing time.

Example method 500B further comprises, in block 506, sensing, by the sensor, a failed closing of the lock. Such failed closing may correspond to a sensor output being maintained between a lock closing threshold value and a lock opening threshold value during a predetermined amount of time.

Figure 6 illustrates another example method 600 of storing lock data output. Example method 600 comprises blocks 501-504 which have been described in the context of example method 500A. Example method 600 may optionally further comprise other blocks such as, for example, one or more of blocks 505 or 506. Example method 600 applies to a consumer product which comprises an additional sensor, preferably a weight sensor, configured to measure a rate of consumption of the detergent product over time. Method 600 further comprises block 607 of measuring, by the additional sensor, a consumption rate. In some examples, the consumption rate corresponds to an output of the weight sensor reducing over a specific period of time. Such a consumption rate may be, by the processor, correlated with opening and closing time lock data in order to precisely describe consumer behaviours, correlating an amount of consumption, a time of consumption and an effectivity of a lock opening and closing. Such information permits evaluating the effectivity of a given lock.

Figure 7A illustrates an example method 700A of analysing lock data output by a sensor of a consumer product according to this disclosure. This example method should be understood as a computer implemented method, in particular implemented at a remote data processing unit or remote data storage unit according to this description. Such a unit may comprise a server connected by wire or wirelessly to a network such as internet. In block 701, method 700A comprises receiving, at the remote data processing unit, lock data transmitted by a networking module or data connector. Such lock data may have been produced by a processor of a consumer product according to this description and comprise closing and opening related data. In some examples, the remote data processing unit or remote data storage unit according to this description is connected, by wire or wirelessly, to a plurality of consumer product according to this description.

Example method 700A comprises, in block 702, comparing, by the remote data processing unit, the received lock data to predetermined lock data profiles. Predetermined lock data profiles may be predetermined using a machine learning algorithm such as, for example, random forest, artificial neural network or vector machine. Predetermined lock data profiles may for example correspond to one or more of:
Consumers using the lock correctly, whereby, for example, a consumption sensor identifies a unit dose consumption preceded by an opening and followed by a closing of the lock, the opening and the closing being within a predetermined time window, for example of less than 1 minute.

Consumer using the lock partially, whereby, for example, a consumption sensor identifies a plurality of unit dose consumption, the plurality being preceded by an opening and followed by a closing of the lock, the opening and the closing being within a predetermined time window, for example of less than 48 hours.

Consumer not using the package, whereby, for example, a consumption sensor identifies a complete unit dose consumption within a time window of less than 10 minutes.

Numerous other consumer profiles may be predetermined, permitting the analysis of consumer behaviors, permitting taking this behavior into account to improve the reliability of locks, or adapting specific lock types to specific geographies or consumer segments.

Example method 700A comprises, in block 703, in response to the comparison, identifying, by the remote data processing unit, a deviation from the predetermined data profiles. This permits detecting a consumer behaviour different from previously observed consumer behaviours, which, as will be exampled below, may be investigated. The deviation may for example comprise a statistical deviation from a predetermined time lock data profile.

Figure 7B illustrates an example method 700B of analysing lock data output by a sensor of a consumer product according to this disclosure. Method 700B comprises block 701-703 as described in the context of Figure 7A. Example method 700B further comprises, in block 704, transmitting, by the remote data processing unit, a message to a consumer. In some examples, such transmission comprises a wireless transmission from the remote data processing unit to a mobile terminal of the consumer. In some examples, the consumer is requested to provide feedback or answer a question related to the deviation. Such answer or feedback may contribute to generating a new additional data profile associated to a related behaviour. Indeed, example method 700B comprises, in block 705, receiving, at the remote data processing unit, feedback from the consumer in response to the message, and, in block 706, creating, by the remote data processing unit, an additional data profile. In some examples, the block 704 further comprises formulating a hypothesis which is sent to the consumer, the hypothesis being confirmed or infirmed in step 705.

In some examples, the detergent product comprises flexible water soluble unit dose articles. The structures hereby disclosed are particularly suited for such flexible water soluble unit dose articles which are particularly sensitive to degradation by humidity, and more likely to puncture and contaminate an environment outside of the container, thereby particularly benefiting the use of a ventilated lid according to this disclosure.

In some examples a water-soluble unit dose article comprises at least one water-soluble film orientated to create at least one-unit dose internal compartment, wherein the at least one-unit dose internal compartment comprises a detergent composition. The water-soluble film and the detergent composition are described in more detail below. In some examples the consumer product comprises at least one water-soluble unit dose article, in some cases at least two water-soluble unit dose articles, in some cases at least 10 water-soluble unit dose articles, in some cases at least 20 water-soluble unit dose articles, in some cases at least 30 water-soluble unit dose articles, in some cases at least 40 water-soluble unit dose articles, in some cases at least 45 water-soluble unit dose articles. A water-soluble unit dose article is in some examples in the form of a pouch. A water-soluble unit dose article comprises in some examples a unitary dose of a composition as a volume sufficient to provide a benefit in an end application. The water-soluble unit dose article comprises in some examples one water-soluble film shaped such that the unit-dose article comprises at least one internal compartment surrounded by the water-soluble film. The at least one compartment comprises a cleaning composition. The water-soluble film is sealed such that the cleaning composition does not leak out of the compartment during storage. However, upon addition of the water-soluble unit dose article to water, the water-soluble film dissolves and releases the contents of the internal compartment into the wash liquor. The unit dose article may comprise more than one compartment, at least two compartments, or at least three compartments, or at least four compartments, or even at least five compartments. The compartments may be arranged in superposed orientation, i.e. one positioned on top of the other. Alternatively, the compartments may be positioned in a side-by-side orientation, i.e. one orientated next to the other. The compartments may be orientated in a 'tyre and rim' arrangement, i.e. a first compartment is positioned next to a second compartment, but the first compartment at least partially surrounds the second compartment, but does not completely enclose the second compartment. Alternatively, one compartment may be completely enclosed within another compartment. In some examples the unit dose article comprises at least two compartments, one of the compartments being smaller than the other compartment. In some examples the unit dose article comprises at least three compartments, two of the compartments may be smaller than the third compartment, and in some examples the smaller compartments being superposed on the larger compartment. The superposed compartments are in some examples orientated side-by-side. In some examples each individual unit dose article may have a weight of between 10g and 40g, or even between 15g and 35g. The water soluble film may be soluble or dispersible in water. Prior to be being formed into a unit dose article, the water-soluble film has in some examples a thickness of from 20 to 150 micron, in other examples 35 to 125 micron, in further examples 50 to 110 micron, in yet further examples about 76 micron. Example water soluble film materials comprise polymeric materials. The film material can, for example, be obtained by casting, blow-moulding, extrusion or blown extrusion of the polymeric material. In some examples, the water-soluble film comprises polyvinyl alcohol polymer or copolymer, for example a blend of polyvinylalcohol polymers and/or polyvinylalcohol copolymers, for example selected from sulphonated and carboxylated anionic polyvinylalcohol copolymers especially carboxylated anionic polyvinylalcohol copolymers, for example a blend of a polyvinylalcohol homopolymer and a carboxylated anionic polyvinylalcohol copolymer. In some examples water soluble films are those supplied by Monosol under the trade references M8630, M8900, M8779, M8310. In some examples the film may be opaque, transparent or translucent. The film may comprise a printed area. The area of print may be achieved using techniques such as flexographic printing or inkjet printing. The film may comprise an aversive agent, for example a bittering agent. Suitable bittering agents include, but are not limited to, naringin, sucrose octaacetate, quinine hydrochloride, denatonium benzoate, or mixtures thereof. Example levels of aversive agent include, but are not limited to, 1 to 5000ppm, 100 to 2500ppm, or 250 to 2000ppm. The water-soluble film or water-soluble unit dose article or both may be coated with a lubricating agent. In some examples, the lubricating agent is selected from talc, zinc oxide, silicas, siloxanes, zeolites, silicic acid, alumina, sodium sulphate, potassium sulphate, calcium carbonate, magnesium carbonate, sodium citrate, sodium tripolyphosphate, potassium citrate, potassium tripolyphosphate, calcium stearate, zinc stearate, magnesium stearate, starch, modified starches, clay, kaolin, gypsum, cyclodextrins or mixtures thereof.

In some examples the detergent product comprises a detergent composition. The detergent composition may be a laundry detergent composition, an automatic dishwashing composition, a hard surface cleaning composition, or a combination thereof. The detergent composition may comprise a solid, a liquid or a mixture thereof. The term liquid includes a gel, a solution, a dispersion, a paste, or a mixture thereof. The solid may be a powder. By powder we herein mean that the detergent composition may comprise solid particulates or may be a single homogenous solid. In some examples, the powder detergent composition comprises particles. This means that the powder detergent composition comprises individual solid particles as opposed to the solid being a single homogenous solid. The particles may be free-flowing or may be compacted. A laundry detergent composition can be used in a fabric hand wash operation or may be used in an automatic machine fabric wash operation, for example in an automatic machine fabric wash operation. Example laundry detergent compositions comprise a non-soap surfactant, wherein the non-soap surfactant comprises an anionic non-soap surfactant and a non-ionic surfactant.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A consumer product comprising water-soluble unit dose detergent articles and a container, the container comprising:
- a first chamber defining a first volume, the first chamber containing the water-soluble unit dose detergent articles, the first chamber being accessible through an opening;
- a lock to permit opening or closing of the first chamber;
- a data processing apparatus comprising a processor, a power source connected to the processor, a sensor connected to the processor and a memory connected to the processor, the sensor being configured to sense the opening or closing of the first chamber by the lock to produce output lock data, the processor being configured to receive the output lock data from the sensor.

2. The consumer product according to claim 1, whereby the memory is configured to store the output lock data.

3. The consumer product according to any of the above claims, whereby the processor and the sensor communicate wirelessly or whereby, and preferably, a connection cable runs between the processor and the sensor.

4. The consumer product according to any of the above claims, whereby the data processing apparatus further comprises a wireless networking module or a data connector, the wireless networking module or a data connector being configured to transmit the output lock data to a remote data processing unit or to a remote data storage unit.

5. The consumer product according to any of the above claims, the data processing apparatus being configured to produce less than 10dB preferably less than 5dB most preferably less than 1dB of sound and/or the data processing apparatus being configured to produce less than 1 lux, preferably less than 0.1 lux, more preferably less 0.01 lux of illuminance and/or the data processing apparatus being configured to consume less than 10 W, preferably less than 1 W, more preferably less 0.1 W of power.

6. The consumer product according to any of the above claims further comprising a magnet, the magnet being located in proximity to the lock, the sensor being configured to sense a variation in magnetic field upon opening or closing of the lock, the sensor being preferably a Hall sensor.

7. The consumer product according to any of the above claims, the container being preferably a re-sealable bag, the sensor comprising one or more of a flex sensor, contact point sensors, a flexible potentiometer, a sensor configured to measure bending or flexing and a hall effect sensor.

8. The consumer product according to any of the above claims, whereby the power source is configured to operate the data processing apparatus for at least 7 days, the power source being preferably a battery.

9. The consumer product according to any of the above claims, whereby the power source is configured to be charged by induction.

10. The consumer product according to any of the above claims, the consumer product comprising a second chamber defining a second volume, the second chamber comprising at least part of the data processing apparatus, the second volume being of less than 25% of the first volume, whereby the first chamber and the second chamber are preferably at least partially separated by a cardboard layer, by a plastic resin layer, a metallic layer, a three dimensional, 3D-printed layer, a computer numerical control, CNC, milled layer or by a combination of the these.

11. The consumer product according to claim 10, whereby the container comprises a lid, the lid comprising a cavity, the second chamber comprising the cavity.

12. The consumer product according to claim 11, the cavity being comprised in a support element of the lid.

13. The consumer product according to claim 10, the second chamber being comprised at least partially at a base element of the container.

14. The consumer product according to any of claims 1 to 10, whereby the container is selected from a bag, a box or a tub, preferably selected from a plastic bag, a paper bag, a cardboard box or a plastic tub.

15. The consumer product according to any of the above claims, the lock being configured to be childproof.

16. The consumer product according to any of the above claims, further comprising one or more additional sensors, the one or more additional sensors comprising preferably one or more of a weight sensor, a humidity sensor, a motion sensor, an electrical sensor, a resistance sensor, a capacitive sensor, an inductive sensor, a continuity sensor, a chemical sensor, an audio sensor, a microphone, a strain gauge, a pH sensor, a sensor comprising a chemiresistor polymer, a material expansion sensor, a vibration sensor or a temperature sensor.

17. The consumer product according to any of the above claims, whereby the water soluble unit dose detergent articles comprise water soluble unit dose detergent articles in which a detergent composition is enclosed in a water soluble film, preferably flexible water soluble unit dose detergent articles in which a detergent composition is enclosed in a water soluble film.

18. A method of storing lock data output by a sensor of a consumer product according to any of the above claims, the method comprising:
- sensing, by the sensor, the opening of the lock;
- in response to the sensing of the opening, producing opening time lock data;
- sensing, by the sensor, the closing of the lock;
- in response to the sensing of the closing, producing closing time lock data.

19. The method according to claim 18, the method further comprising one or more of:
- producing a closed or open lock duration lock data; and
- sensing, by the sensor, a failed closing of the lock.

20. The method according to any of claims 18 or 19, whereby the consumer product comprises an additional sensor, preferably a weight sensor, configured to measure a rate of consumption of the water soluble unit dose detergent articles over time, the method comprising:
- measuring, by the additional sensor, a consumption rate.

21. A method of analysing lock data output by a sensor of a consumer product according to any of claims 1 to 17, the method comprising:
- receiving, at a remote data processing unit, lock data transmitted by a networking module or data connector;
- comparing, by the remote data processing unit, the received lock data to predetermined lock data profiles;
- in response to the comparison, identifying, by the remote data processing unit, a deviation from the predetermined data profiles.

22. The method according to claim 21, further comprising:
- transmitting, by the remote data processing unit, a message to a consumer;
- receiving, at the remote data processing unit, feedback from the consumer in response to the message; and
- creating, by the remote data processing unit, an additional data profile.

23. A non-transitory machine-readable storage medium encoded with instructions executable by a processor, the machine-readable storage medium comprising instructions to operate according to any of claims 18 to 22.
